# EUROPEAN PATENT SPECIFICATION

(11) **EP 1 751 033 B1**
(45) Date of publication and mention of the grant of the patent: **15.08.2007**
(21) Application number: 05763225.9
(22) Date of filing: 23.06.2005
(51) Int. Cl.: B65D 83/16, B65D 83/20

(54) **VALVE ACTUATING APPARATUSES AND METHODS ASSOCIATED THEREWITH**
VENTILBETÄTIGUNGSVORRICHTUNGEN UND ENTSPRECHENDE VERFAHREN
APPAREILS D'ACTIONNEMENT DE SOUPAPES ET PROCEDES ASSOCIES

(30) Priority: 25.06.2004 US 877162
(43) Date of publication of application: 14.02.2007
(73) Proprietor: S.C.JOHNSON & SON, INC., Racine, WI 53403-2236 (US)
(72) Inventor: HEALY, Brian, E., Hartland, WI 53029 (US); WESTPHAL, Nathan, R., Union Grove, WI 53182 (US); MILLER, Allen, D., Racine, WI 53406 (US); DEMAREST, Scott, W., Caledonia, WI 53108 (US); CONWAY, Simon, M., Burlington, WI 53105 (US)
(74) Representative: Ruschke, Hans Edvard
(86) International application number: PCT/US2005/022395
(87) International publication number: WO 2006/012269

(56) References cited:
- WO-A-03/103760
- BE-A6- 1 010 692
- DE-U1- 8 602 237
- FR-A- 2 338 866
- US-A- 3 487 979
- US-A- 3 794 217
- US-A- 5 287 998

## Description

### BACKGROUND OF THE INVENTION

### 1. Field of the Invention

The present invention relates generally to housings that hold containers, and more particularly to housings that hold containers and actuators that actuate valve apparatus to dispense product from the container.

### 2. Description of the Background of the Invention

Various apparatus for dispensing product from a container or reservoir of product have been developed. Smrt U.S. Patent No. 5,287,998 discloses an actuator fitted to a container and including an axially extending passage therethrough for discharging product. The actuator includes a pair of wings that extend transversely from the actuator. The container may be moved axially within a device such that the wings bear against a surface defining a passage, thereby discharging product through the passage.

Brotspies et al US Patent 6,386,397 discloses a spray bottle grip used with a nasal spray bottle. The grip is coupled to a reciprocating nozzle of the spray bottle, and two arms extend downwardly along the spray bottle. The arms include finger flanges that provide an ergonomic means of reciprocating the nozzle to dispense product from the spray bottle.

Haas U.S. Patent No. 3,318,492 discloses a disc-shaped actuator attached to a nozzle of a container. A user may depress the actuator with her finger to dispense product from the container.

Scheindel et al. U.S. Patent No. 6,340,103 discloses a handle extending along a container body. When a user pulls the handle toward the container body, a portion of the handle pushes downwardly upon a nozzle portion of the container to dispense product from the container.

Micallef U.S. Patent No. 4,138,039 discloses a container having a vertically reciprocating tubular pump. A cap is fitted to the container and includes an actuator button extending from a sidewall of the cap. Movement of the actuator button in a direction toward the sidewall of the cap is translated into perpendicular reciprocating movement of the pump.

Other patents disclose devices having a container of product disposed at a first end of a rod and having a trigger mechanism at a second end of the rod wherein a user may actuate the container from a distance. Discharging product from a distance can be an advantage for many purposes, such as accessing hard-to-reach places or perhaps for discharging an insecticide into a hornet nest without placing oneself too close to the nest Smrt U.S. Patent No. 5,518,148 discloses a device where an actuating rod has a trigger on a first end and a container on a second end. Pulling the trigger moves the actuating rod longitudinally such that the second end of the rod moves a bell crank, which in turn, moves an additional rod that actuates a valve on the container. Aberegg et al. U.S. Patent No. 6,551,001, discloses a cleaning device having a trigger at a first end of a rod and a mop cleaning head and a container at a second end of the rod. Pulling the trigger moves a pivot link, which in turn actuates a valve of the container, thereby discharging product from the container onto the surface to be cleaned by the mop cleaning head.

Adams et al. U.S. Patent No. 5,358,147, assigned to the present assignee and also incorporated herein by reference, discloses a container of air freshener inserted into a shroud. The shroud includes a nozzle that is fitted over a valve stem of the container. The combination of the container and the shroud is placed within a housing. When a user wishes to spray air freshener into ambient air, the user pushes the housing, which in turn pushes the shroud and the valve stem to dispense the air freshener out of the housing.
Document WO 03/103760 shows a combination comprising: a container of product having a longitudinal dimension and a valve oriented to discharge product generally longitudinally from the container; a housing including a first wall portion enclosing a main body of the container and a second tapered wall portion adjacent the first wall portion tapering to a discharge opening wherein the discharge opening has a cross- sectional size larger than a radius of the container and valve actuating apparatus extending laterally from the valve.

### Summary of the Invention

According to the present invention there is provided a combination as defined in claim 1 and a method of dispensing as defined in claim 10.

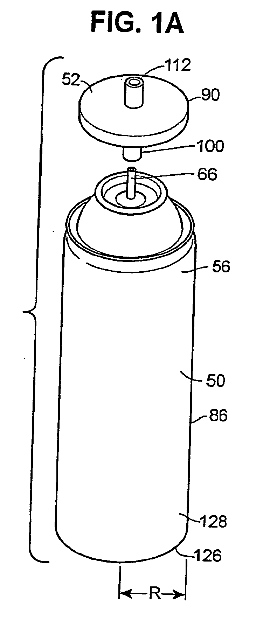

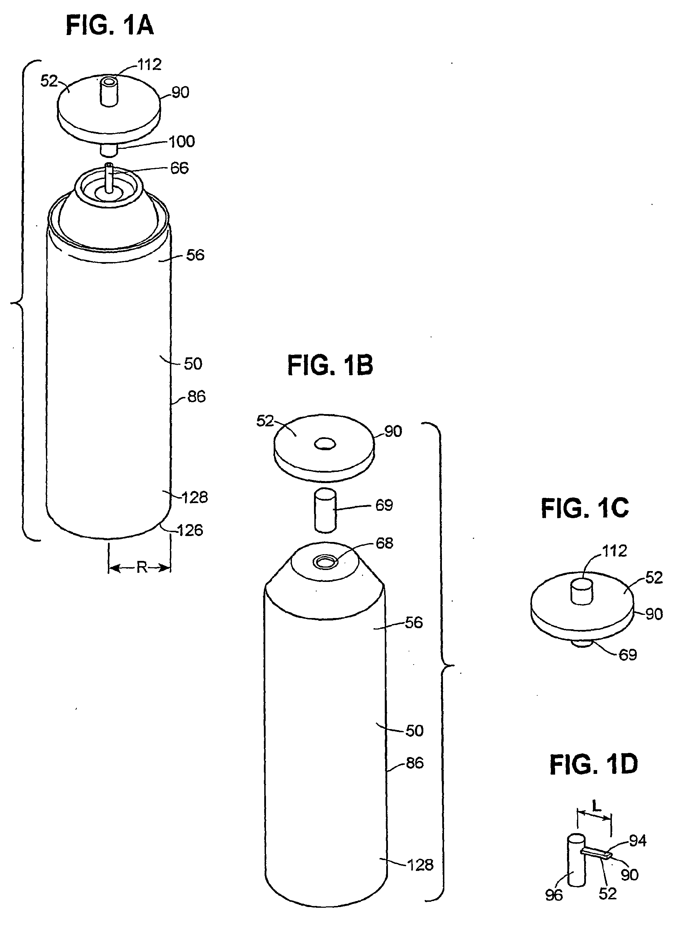

Other aspects and advantages of the present invention will become apparent upon consideration of the following detailed description. It is to be understood that Figures 1-9 do not by themselves show embodiments of the invention. They have been included to show the content of the invention and comparative arrangement.

### BRIEF DESCRIPTION OF THE DRAWINGS

FIG. 1A is an exploded isometric view of a container and valve actuating apparatus;

FIG. 1B is an exploded isometric view showing a container having a female-type receiver valve;

FIG. 1C is an isometric view of valve actuating apparatus;

FIG. 1D is an isometric view of a valve stem having an arm extending therefrom;

FIG. 2 is an exploded isometric view of a housing into which the container of FIG. 1A may be placed;

FIG. 3 is a side elevational view of the housing of FIG. 2;

FIG. 4 is a sectional view taken generally along the lines 4-4 of FIG. 3 further illustrating the container of FIG. 1 in elevation;

FIG. 5 is an enlarged fragmentary view of FIG. 4;

FIG. 5A is an enlarged sectional view taken generally along the lines 5A-5A of FIG. 5;

FIG. 6 is a fragmentary exploded isometric view illustrating a nozzle that may be fitted to a valve stem;

FIG. 7 is an enlarged bottom elevational view of the nozzle of FIG. 6;

FIG. 8 is a side elevational view showing a rod and trigger mechanism in combination with the housing of FIG. 3;

FIG. 9 is a fragmentary partial sectional view taken generally along lines 9-9 of FIG. 8;

FIG. 10 is an isometric view of an alternative valve actuating apparatus as can be used in an embodiment of the present invention

FIG. 11 is a fragmentary isometric view of the valve actuating apparatus of FIG. 10 disposed in the housing of FIG. 1A;

FIG. 12 is a sectional view taken generally along the lines 12-12 of FIG. 11;

FIG. 13 is a sectional view taken generally along the lines 13-13 of FIG. 11 and further illustrating the container of FIG. 1A in elevation;

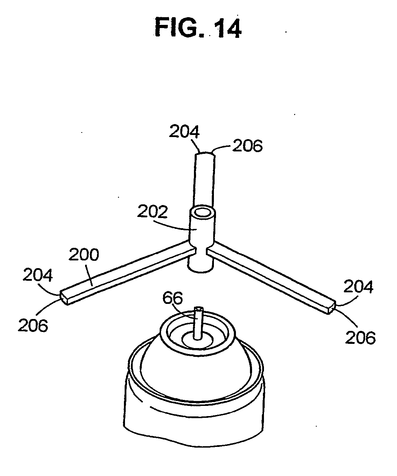

FIG. 14 is a fragmentary exploded isometric view illustrating a further embodiment of valve actuating apparatus.

### DETAILED DESCRIPTION OF THE PREFERRED EMBODIMENTS

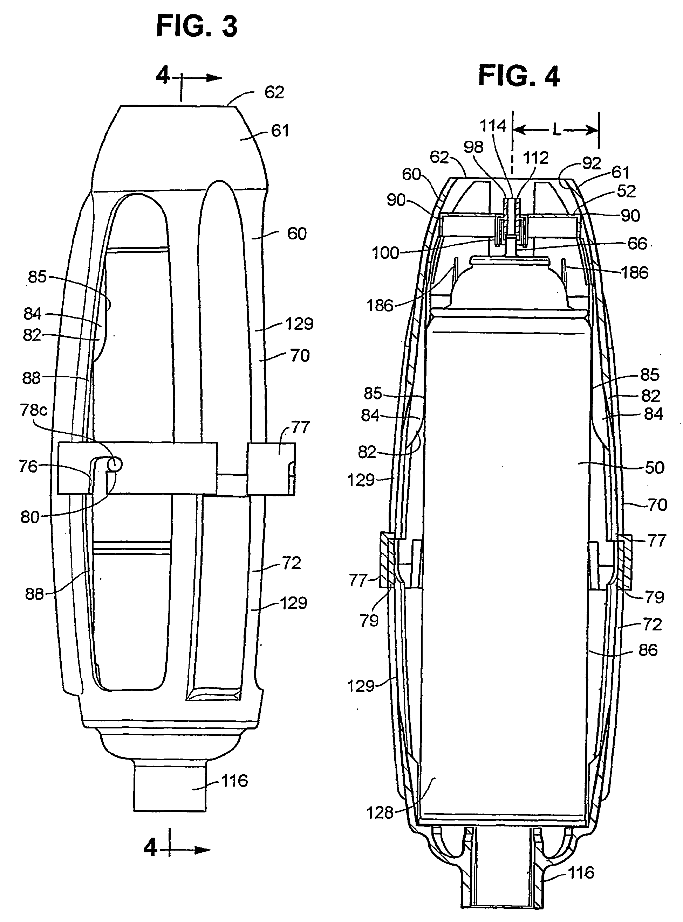

FIG. 1A illustrates a container 50 and a valve actuating apparatus 52 actuable to dispense product from the container 50. The container 50 includes a main container body 56 that contains product. Referring to FIG. 2, a housing 60 is provided, in which the container 50 may be placed. The housing 60 includes a wall 61 that decreases in cross sectional size, tapering to a discharge opening 62. The discharge opening 62 has a cross sectional size greater than a radius R of the container 50. The container 50 includes a valve stem 66 that actuates a valve (not shown) disposed within the container body 56, and product flows from the valve stem 66 in a direction substantially parallel to an axial dimension of the container 50. The valve stem 66 could be either a vertically depressible valve stem or a tilt valve stem. As will be appreciated hereinafter, if a tilt valve stem is utilized such stem could also alternatively be depressed vertically without tilting to dispense product therethrough. Referring to FIG. 1B, one could substitute the valve stem 66 with a female valve 68 that receives a suitable insertion tube 69. As shown in FIG. 1C, the insertion tube 69 could be integral with or secured to the valve actuating apparatus 52. Alternatively, the valve actuating apparatus 52 could be separable from the insertion tube 69. Similarly, it should be evident that the valve actuating apparatus 52 could be separable from the valve stem 66 or could be secured in fixed relation thereto or could be integral therewith. Referring again to FIG. 2, the housing 60 may include first and second wall portions 70, 72 that may be joined together to house the container 50. The portion 70 may include three bayonet slots 76a-76c disposed on an end 77 of the portion 70 and equally spaced from one another by 120 degrees. To join the portions 70, 72, a user inserts pins 78a-78c carried by an end 79 of the portion 72 into the slots 76a-76c and provides a relative rotation of the portions 70, 72 to seat the pins 78a-78c within recessed regions 80a-80c of the slots 76.

Either of the portions 70, 72 may include protrusions 82 such as guide fins 84 having edges 85 that abut an exterior surface 86 of the container 50 when the container 50 is placed therein to center the container 50 within the housing 60. Either of the portions 70, 72 may include elongate openings or windows 88 that allow a user to see the container 50 when the container is disposed within the housing 60. The windows 88 further provide an advantage in that the user may see written directions or graphics disposed on the container 50.

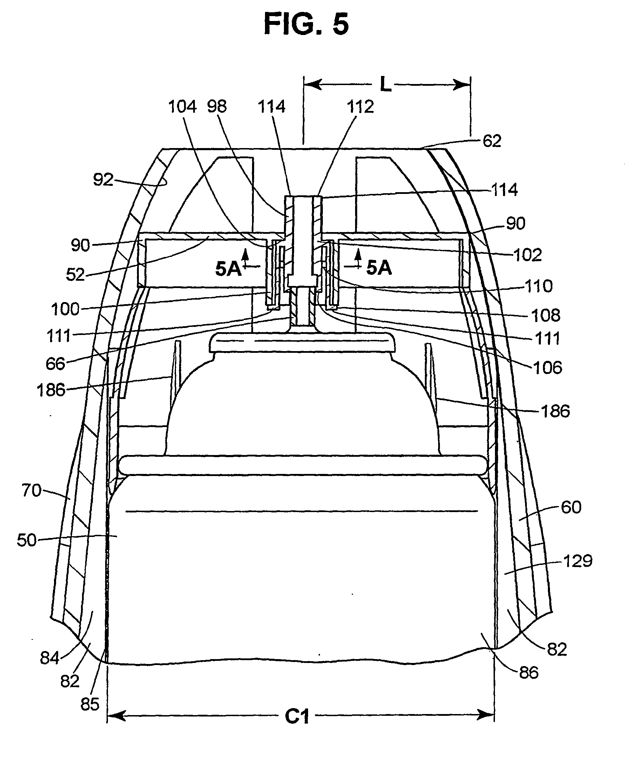

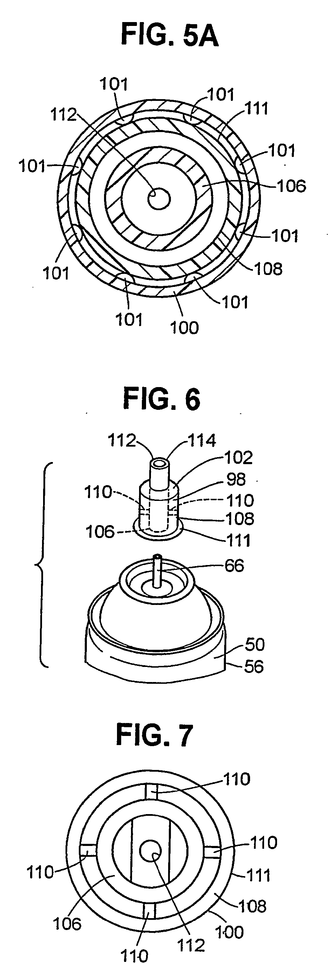

Referring to FIGS. 4 and 5, the valve actuating apparatus 52 extends in a direction transverse to a longitudinal dimension of the container 50. The valve actuating apparatus 52 has a length L defined between a center of the valve stem 66 and an outer peripheral surface 90 of the valve actuating apparatus 52. As seen in FIG. 5, the length L is selected relative to the inner dimensions of the wall 61 such that the outer peripheral surface 90 is disposed in interfering relationship with the wall 61. Relatively moving the container 50 and the housing 60 such that the main body 56 of the container 50 and the discharge opening 62 are moved toward each other causes the outer peripheral surface 90 to contact a surface 92 of the wall 61, thereby displacing the valve actuating apparatus 52 and dispensing product out of the discharge opening 62. It should be appreciated that the valve actuating apparatus 52 could be of any suitably shaped structure. For example, referring to FIG. 1D, the valve actuating apparatus 52 could include a single arm 94 having at least a portion of length L and extending from a tilt-type valve stem 96.

Referring to FIGS. 5-7, a nozzle 98 may be fitted to the valve stem 66 and the nozzle 98 may be fitted within a bore defined by a circumferential wall 100 of the valve actuating apparatus 52. The nozzle 98 includes a shoulder 102 that abuts a bearing surface 104 of the valve actuating apparatus 52. Referring to FIG. 5A, the wall 100 may include ribs 101 extending therefrom that engage the wall 108. In addition, the wall 100 may be tapered to facilitate insertion of the nozzle 98 therein. The nozzle 98 may include an inner circumferential wall 106 defining a flow passage and surrounded by an outer circumferential wall 108 connected to the inner circumferential wall 106 by radially extending members 110. The nozzle 98 may also have a flange 111 that abuts a lower periphery of the circumferential wall 100 as seen in FIG. 5. An outlet 112 is located at a discharge orifice 114 of the nozzle 98. Various conventional internal features can be selected so as to impart a desired spray characteristic to product discharged from the nozzle 98. Nozzles such as nozzle 98 are commercially available from Summit Packaging Systems, Inc. of Manchester, New Hampshire.

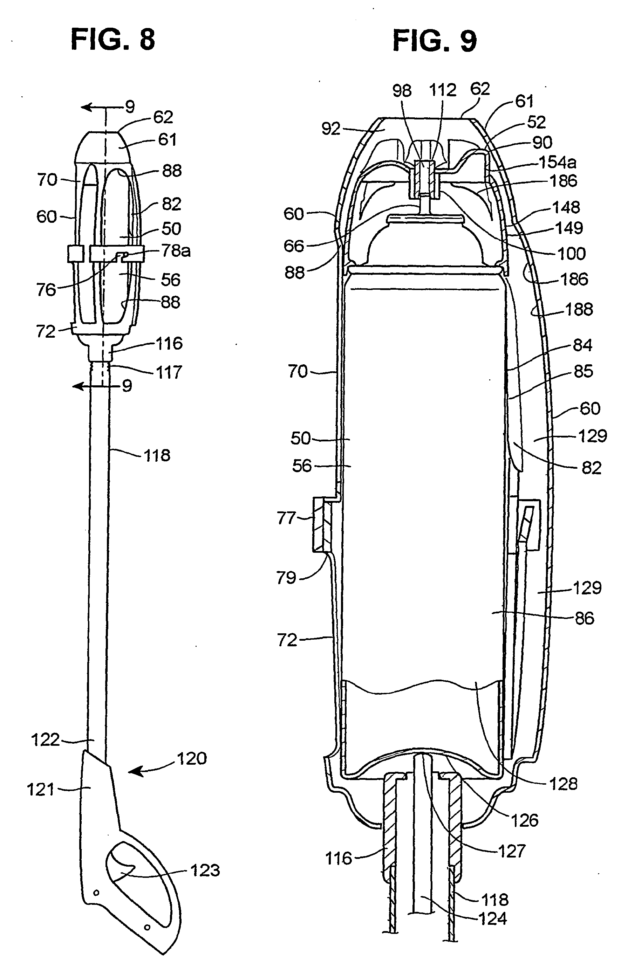

Referring to FIGS. 8 and 9, the housing 60 includes a sleeve 116 attached by any suitable means to a first end 117 of a hollow tube 118 of a rod and trigger mechanism 120. A handle assembly 121 is secured by any suitable means to a second end 122 of the hollow tube 118. Pulling a trigger 123 of the handle assembly 121 advances a push rod 124 (FIG. 9) disposed within the tube 118 against a bottom surface 126 of the container 50, thereby advancing the valve actuating apparatus 52 toward the discharge opening 62 to dispense product from the housing 60. If necessary or desirable, an end 127 of the push rod 124 may be shaped and/or fitted with a plate or other member to distribute forces more evenly across the bottom surface 126 of the container 50. Further, if desired, rather than moving the container 50 relative to the housing 60 using one or more intermediate members one could manually move the container 50 and/or the housing 60 relative to one another to dispense product.

Referring again to FIG. 5, a main region 129 of the wall portions 70 and 72 may have an inner cross sectional size C1 of about 66 mm, and thus the container 50 could have a cross sectional size of up to about 66 mm. In this regard, while a range of sizes is available for the container 50 one might wish to provide a container sized at or near maximum to provide a maximum useful life for the container 50 given the available space within the housing 60. One could select any suitable size for the discharge opening 62, such as a cross sectional size of about 34 mm, and suitable values of L might range between about 18 mm and about 33 mm to provide the above-described interfering relationship. A preferred value for L is about 25 mm.

The product stored within the container body 56 could be any of a broad variety of products such as an air freshener, an insect control agent, a hair spray, a cleaning agent, a polishing agent, a fragrance, or other any other product stored in a container. Further, the product may be pressurized by a suitable propellant disposed within the container 50.

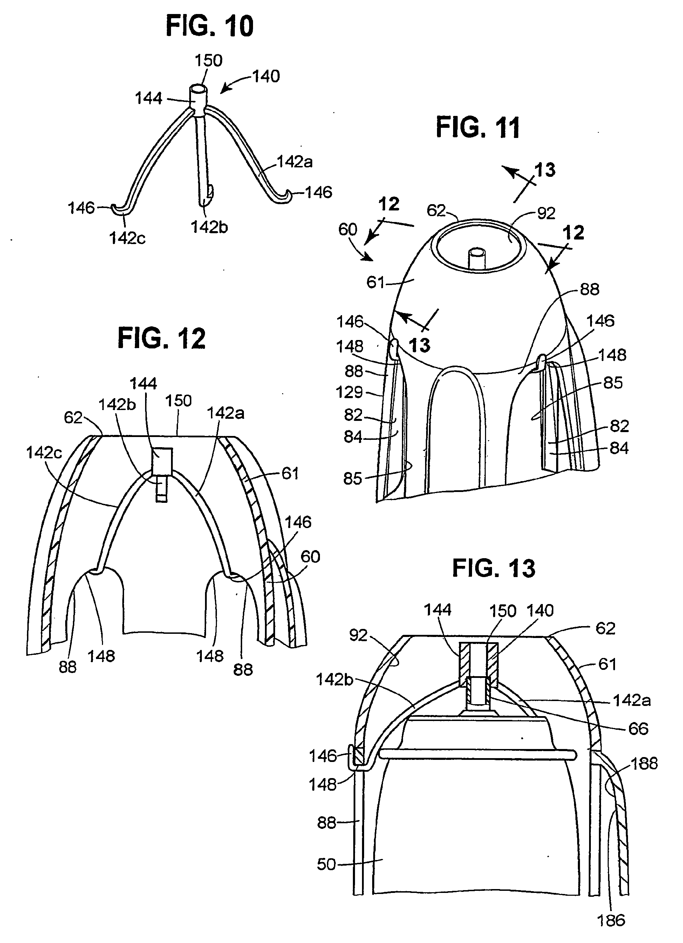

Referring now to FIGS. 10-13, an alternative valve actuating apparatus 140 useable in arrangements embodiyng the invention includes a plurality of arms 142, such as three arms 142a-142c spaced apart from one another by 120 degrees. Each of the arms 142 extends from an adapter 144 that is fitted to the valve stem 66 shown in FIG. 13. Each of the arms 142 terminates at a hook member 146. Referring in particular to FIG. 13, providing a relative movement of the container 50 toward the discharge opening 62, as described above, causes the hook members 146 to engage against ledges 148 of the windows 88 such that the arms 142 pull the adapter 144 toward the container 50, thereby displacing the valve stem 66, causing product to discharge through a passage in the adapter 144, out of an opening 150 in the adapter 144, and out of the housing 60.

As should be evident from the foregoing, it is within the scope of the present invention for valve actuating apparatus to be disposed in interfering relationship with any suitable surface of the housing 60 other than the surface 92 of the tapered wall 61. For example, in the embodiment of FIGS. 10-13, the hook members 146 are disposed in interfering relationship with the ledges 148 of the windows 88.

### INDUSTRIAL APPLICABILITY

The foregoing embodiments are useful for dispensing a variety of products such as insecticides, cleaning products, air treatment products (e.g., air fresheners), or other products.

Numerous modifications to the present invention will be apparent to those skilled in the art in view of the foregoing description. Accordingly, this description is to be construed as merely exemplary of the inventive concepts taught herein and is presented for the purpose of enabling those skilled in the art to make and use the invention and to teach the best mode of carrying out same. The exclusive rights to all modifications which come within the scope of the appended claims are reserved.

## Claims

1. A combination, comprising:
a container (50) of product having a longitudinal dimension and a valve (66) oriented to discharge product generally longitudinally from the container (50);
a housing (60) including a first wall portion (70, 72) enclosing a main body of the container and a second tapered wall portion (61) adjacent the first wall portion (70, 72) tapering to a discharge opening (62) wherein the discharge opening has a cross sectional size larger than a radius of the container, and
valve actuating apparatus (140) extending laterally from the valve and having an interfering relationship with the first wall portion (70, 72) wherein relative movement of the container (50) toward the discharge opening causes the valve actuating apparatus (140) to be displaced against the first wall portion (70, 72) to actuate the valve and dispense product from the housing (60).

2. The combination of claim 1, wherein the valve actuating apparatus (140) includes an extension member (142a, 142b, 142c) terminating at a hook member (146) wherein the hook member (146) interferes with a surface (148) of the first wall portion (70, 72).

3. The combination of claim 2, further comprising an additional extension member (142a, 142b, 142c).

4. The combination of claim 3, wherein the valve actuating apparatus (140) includes first, second and third extension members (142a, 142b, 142c) and wherein each of the extension members (142a, 142b, 142c) terminates at a hook member (146) and the hook members (146) interfere with surfaces (148) of the first wall portion.

5. The combination of any of claims 2 to 4, wherein the surface is a ledge (148) defined by an opening (88) disposed in the first wall portion (70, 72).

6. The combination of claim 1, wherein the first wall portion (70, 72) is tapered and includes a plurality of guide fins (84), the valve actuating apparatus (192) having an interfering relationship with at least one of the guide fins (84).

7. The combination of claim 1, wherein the valve actuating apparatus (192) is disposed in interfering relationship with a plurality of surfaces of the first wall portion (70, 72).

8. The combination of claim 1, wherein the valve actuating apparatus (192) comprises a cage (183) surrounding the container (50) of product.

9. The combination of claim 8, wherein the cage (183) has a flange disposed on a lower exterior surface in interfering relationship with fins (84) on the inside of the housing (60).

10. A method of dispensing, the method comprising the steps of:
selecting a container (50) of product and valve actuating apparatus (140) wherein the container has a longitudinal dimension and has a valve oriented to discharge product generally longitudinally from the container (50);
selecting a housing (60) having a first wall portion (70, 72) enclosing a main body of the container and a second tapered wall portion (61) adjacent the first wall portion (70, 72) wherein the second wall portion (61) tapers to a discharge opening (62) and wherein the discharge opening (62) has a cross sectional size large than a radius of the container (50);
placing the container (50) within the housing wherein the valve actuating apparatus (140) extends laterally from the valve and has an interfering relationship with the first wall portion (70, 72), and
providing a relative movement of the container toward the discharge opening (62) such that the valve actuating apparatus (140) is displaced against the first wall portion (70, 72) to actuate the valve and dispense product from the housing (60).

## Patentansprüche

1. Kombination aus:
einem Behälter (50) mit einem Produkt, der eine Längsausdehnung sowie ein Ventil (66) aufweist, das so gerichtet ist, dass es das Produkt allgemein in Längsrichtung aus dem Behälter (50) ausgeben kann;
einem Gehäuse (60) mit einem ersten Wandteil (80, 72), der einen Hauptteil des Behälters umschließt, und einem an den ersten Wandteil (70, 72) angrenzenden zweiten verjüngten Wandteil (61), der zu einer Austrittsöffnung (62) hin sich verjüngt, wobei der Querschnitt der Austrittsöffnung größer ist als der Behälterradius; und
einer Ventilbetätigungsvorrichtung (140), die sich seitlich vom Ventil ab erstreckt und dem ersten Wandteil (70, 72) ihn berührend zugeordnet ist, wobei eine Relativbewegung des Behälters (50) zur Austrittsöffnung hin bewirkt, dass die Ventilbetätigungsvorrichtung (140) gegen den ersten Wandteil (70, 72) versetzt wird, um das Ventil zu betätigen und Produkt aus dem Gehäuse (60) auszugeben.

2. Kombination nach Anspruch 1, bei der die Ventilbetätigungsvorrichtung (140) ein von ihr abstehendes Element (142a, 142b, 142c) aufweist, das zu einem Hakenelement (146) ausläuft, das in gegenseitiger Beeinflussung mit einer Oberfläche (148) des ersten Wandteils (70, 72) steht.

3. Kombination nach Anspruch 2 weiter mit einem zusätzlichen abstehenden Element (142a, 142b, 142c).

4. Kombination nach Anspruch 3, bei der die Ventilbetätigungsvorrichtung (140) ein erstes, ein zweites und ein drittes abstehendes Element (142a, 142b, 142c) aufweist, die jeweils zu einem Hakenelement (146) auslaufen, wobei die Hakenelemente (146) in die gegenseitige Beeinflussung mit Oberflächen (148) des ersten Wandteils treten.

5. Kombination nach einem der Ansprüche 2 bis 4, bei der die Oberfläche eine Leiste (148) an einer Öffnung (88) im ersten Wandteil (80, 72) ist.

6. Kombination nach Anspruch 1, deren erster Wandteil (70, 72) verjüngt geführt ist und eine Vielzahl von Führungsflügeln (84) aufweist, wobei die Ventilbetätigungsvorrichtung (192) mit mindestens einem der Führungsflügel (84) in gegenseitige Beeinflussung steht.

7. Kombination nach Anspruch 1, bei der die Ventilbetätigungsvorrichtung (192) mit einer Vielzahl von Oberflächen des ersten Wandteils (70, 72) in gegenseitiger Beeinflussung steht.

8. Kombination nach Anspruch 1, bei der die Ventilbetätigungsvorrichtung (192) einen Käfig (183) aufweist, der den Produkt enthaltenden Behälter (50) umgreift.

9. Kombination nach Anspruch 8, bei der der Käfig (183) einen Flansch an einer unteren Außenfläche in Berührung mit Flügeln (84) auf der Innenseite des Gehäuses (60) aufweist.

10. Verfahren zum Ausgeben eines Produkts mit folgenden Schritten:
Auswählen eines das Produkt enthaltenden Behälters (50) und einer Ventilbetätigungsvorrichtung (140), wobei der Behälter eine Längsausdehnung sowie ein Ventil aufweist, das so gerichtet ist, dass es Produkt im allgemeinen in Längsrichtung aus dem Behälter (50) ausgibt;
Auswählen eines Gehäuses (60) mit einem ersten Wandteil (70, 72), der einen Hauptteil des Behälters umgibt, und mit einem an den ersten Wandteil (70, 72) angrenzenden zweiten Wandteil (61), wobei der zweite Wandteil (61) zu einer Austrittsöffnung (62) hin verjüngt geführt ist und die Austrittsöffnung (62) einen Querschnitt hat, der größer ist als ein Radius des Behälters (50);
Einsetzen des Behälters (50) in das Gehäuse, wobei die Ventilbetätigungsvorrichtung (140) seitlich vom Ventil absteht und mit dem ersten Wandteil (70, 72) in gegenseitige Beeinflussung tritt; und
Erzeugen einer Relativbewegung des Behälters zur Austrittsöffnung (62) derart, dass die Ventilbetätigungsvorrichtung (140) gegen den ersten Wandteil (70, 72) versetzt wird, um das Ventil zu betätigen und Produkt aus dem Gehäuse (60) auszugeben.

## Revendications

1. Combinaison, comportant :
un réservoir (50) de produit ayant une dimension longitudinale et une soupape (66) orientée afin d'évacuer du produit du réservoir (50) d'une manière globalement longitudinale;
un boîtier (60) comprenant une première partie de paroi (70, 72) enfermant un corps principal du réservoir et une deuxième partie de paroi conique (61) adjacente à la première partie de paroi (70, 72) qui se rétrécit jusqu'à une ouverture d'évacuation (62), l'ouverture d'évacuation ayant une section plus grande qu'un rayon du réservoir, et
un appareil d'actionnement de soupape (140) s'étendant latéralement depuis la soupape et ayant une relation d'interférence avec la première partie de paroi (70, 72), un mouvement relatif du réservoir (50) vers l'ouverture d'évacuation amenant l'appareil d'actionnement de soupape (140) à être déplacé contre la première partie de paroi (70, 72) de façon à actionner la soupape et distribuer du produit depuis le boîtier (60).

2. Combinaison selon la revendication 1, dans laquelle l'appareil d'actionnement de soupape (140) comprend un élément d'extension (142a, 142b, 142c) se terminant au niveau d'un élément de crochet (146), l'élément de crochet (146) interférant avec une surface (148) de la première partie de paroi (70, 72).

3. Combinaison selon la revendication 2, comportant en outre un élément d'extension additionnel (142a, 142b, 142c) .

4. Combinaison selon la revendication 3, dans laquelle l'appareil d'actionnement de soupape (140) comprend des premier, deuxième et troisième éléments d'extension (142a, 142b, 142c) et dans lequel chacun des éléments d'extension (142a, 142b, 142c) se termine au niveau d'un élément de crochet (146) et les éléments de crochet (146) interfèrent avec des surfaces (148) de la première partie de paroi.

5. Combinaison selon l'une quelconque des revendications 2 à 4, dans laquelle la surface est un rebord (148) défini par une ouverture (88) disposée dans la première partie de paroi (70, 72).

6. Combinaison selon la revendication 1, dans laquelle la première partie de paroi (70, 72) est conique et comprend une multiplicité d'ailettes de guidage (84), l'appareil d'actionnement de soupape (192) ayant une relation d'interférence avec au moins une des ailettes de guidage (84).

7. Combinaison selon la revendication 1, dans laquelle l'appareil d'actionnement de soupape (192) est disposé en relation d'interférence avec une multiplicité de surfaces de la première partie de paroi (70, 72).

8. Combinaison selon la revendication 1, dans laquelle l'appareil d'actionnement de soupape (192) comprend une cage (183) qui entoure le réservoir (50) de produit.

9. Combinaison selon la revendication 8, dans laquelle la cage (183) a une bride disposée sur une surface extérieure inférieure en relation d'interférence avec des ailettes (84) sur l'intérieur du boîtier (60).

10. Procédé de distribution, le procédé comportant les étapes consistant à :
sélectionner un réservoir (50) de produit et un appareil d'actionnement de soupape (140), le réservoir ayant une dimension longitudinale et ayant une soupape orientée afin d'évacuer du produit du réservoir (50) de manière globalement longitudinale;
sélectionner un boîtier (60) ayant une première partie de paroi (70, 72) enfermant un corps principal du réservoir et une deuxième partie de paroi conique (61) adjacente à la première partie de paroi (70, 72), la deuxième partie de paroi (61) se rétrécissant jusqu'à l'ouverture d'évacuation (62) et l'ouverture d'évacuation (62) ayant une section plus grande que le rayon du réservoir (50);
placer le réservoir (50) à l'intérieur du boîtier, l'appareil d'actionnement de soupape (140) s'étendant latéralement depuis la soupape et ayant une relation d'interférence avec la première partie de paroi (70, 72), et
prévoir un mouvement relatif du réservoir vers l'ouverture d'évacuation (62) de telle sorte que l'appareil d'actionnement de soupape (140) est déplacé contre la première partie de paroi (70, 72) afin d'actionner la soupape et distribuer du produit à partir du boîtier (60).
